# EUROPEAN PATENT APPLICATION

(11) **EP 4 604 628 A1**
(43) Date of publication of application: **20.08.2025**
(21) Application number: 23898035.3
(22) Date of filing: 26.09.2023
(51) Int. Cl.: H04W 52/28, H04W 52/22, H04W 52/36, H04B 1/3827

(54) **ELECTRONIC DEVICE FOR CONTROLLING TRANSMISSION POWER, AND ELECTRONIC DEVICE OPERATING METHOD**

(30) Priority: 28.11.2022 KR 20220161967; 28.12.2022 KR 20220187470
(71) Applicant: Samsung Electronics Co., Ltd., Suwon-si, Gyeonggi-do 16677 (KR)
(72) Inventor: LEE, Kyungrok, Suwon-si, Gyeonggi-do 16677 (KR); HEO, Wonhyung, Suwon-si, Gyeonggi-do 16677 (KR)
(74) Representative: Gulde & Partner
(86) International application number: PCT/KR2023/014810
(87) International publication number: WO 2024/117501

(57) **Abstract**

An electronic device according to various embodiments comprises a temperature sensor, an application processor, a communication processor and an RF module, wherein the communication processor can acquire, from the application processor, information related to the electronic device temperature measured by the temperature sensor, determine a parameter related to the transmission power of the RF module on the basis of the electronic device temperature, and control the RF module on the basis of the determined parameter. Other various embodiments are possible.

## Description

### [Technical Field]

Various embodiments disclosed in the present document relate to an electronic device for controlling transmission power and an electronic device operating method.

### [Background Art]

In electronic devices to which 5G NR is applied, there is a high possibility that the electronic device will generate heat due to situations such as the use of a high frequency band and the use of a wide bandwidth compared to LTE. The increase in the number of cameras and the installation of high-definition displays also cause heat generation in the electronic device, which can lead to the risk of low-temperature burns. Therefore, the need for heat generation control on the basis of the temperature of the electronic device may be required.

Among the technologies of limiting heat generation, there may be a method of reducing transmission power in communication. For example, when the electronic device generates heat greater than or equal to a designated value, NR call drop and/or LTE fallback may be performed to prevent the temperature of the electronic device from rising. In this case, the RF module may not operate normally, making it difficult to perform communication seamlessly.

### [Disclosure of Invention]

### [Technical Problem]

Time averaged SAR (TAS) refers to a time-dependent average specific absorption rate (SAR), and may be a technology for controlling a communication module so that the electronic device controls the averaged SAR within a target SAR range for a period defined in a standard.

An electronic device according to various embodiments of the present invention may control transmission power of an RF module in response to the temperature exceeding a designated value. Specifically, the electronic device may adjust a threshold value (Plimit) of the transmission power for satisfying the target SAR for a designated period of time in relation to TAS control in response to the temperature exceeding the designated value, a value (Preserve) for outputting the designated power to lower the transmission power when the transmission power exceeds the designated value, and/or maximum power (Pmax) that a transmitter of the RF module may output, so communication may be performed seamlessly even if the temperature of the electronic device rises.

Problems to be solved by the present document are not limited to the above-mentioned objects. That is, other technical problems that are not mentioned may be obviously understood by those skilled in the art to which the present invention pertains from the following description.

An electronic device according to various embodiments disclosed in the present document includes a temperature sensor, an application processor, a communication processor and an RF module, in which the communication processor may acquire, from the application processor, information related to the temperature of the electronic device measured by the temperature sensor, determine a parameter related to the transmission power of the RF module on the basis of the temperature of the electronic device, and control the RF module on the basis of the determined parameter.

An electronic device operating method according to various embodiments disclosed in the present document may include acquiring information related to a temperature of the electronic device measured by a temperature sensor from an application processor, determining a parameter related to transmission power of an RF module on the basis of the temperature of the electronic device, and controlling the RF module on the basis of the determined parameter.

For example, the electronic device may perform communication seamlessly by controlling the transmission power even if the temperature rises due to the heat generation of the electronic device.

### [Brief Description of Drawings]

In connection with the description of the drawings, the same or similar reference numerals may be used for identical or similar components:
FIG. 1 is a block diagram illustrating an electronic device in a network environment according to various embodiments;
FIG. 2 is a block diagram of the electronic device according to various embodiments;
FIG. 3 is a time-dependent transmission power graph related to TAS;
FIG. 4 is a flowchart illustrating a method for a communication processor according to various embodiments to control an RF module on the basis of a temperature of an electronic device;
FIG. 5A is a flowchart illustrating a method for an electronic device according to various embodiments to control an RF module on the basis of a temperature of an electronic device according to a first embodiment;
FIG. 5B is a diagram illustrating a transmission power graph when an electronic device according to various embodiments controls an RF module on the basis of the temperature of the electronic device according to the first embodiment;
FIG. 6A is a flowchart illustrating a method for the electronic device according to various embodiments to control an RF module on the basis of a temperature of an electronic device according to a second embodiment;
FIG. 6B is a diagram illustrating the transmission power graph when the electronic device according to various embodiments controls the RF module on the basis of the temperature of the electronic device according to the second embodiment;
FIG. 7A is a flowchart illustrating a method for the electronic device according to various embodiments to control an RF module on the basis of a temperature of an electronic device according to a third embodiment; and
FIG. 7B is a diagram illustrating the transmission power graph when the electronic device according to various embodiments controls the RF module on the basis of the temperature of the electronic device according to the third embodiment.

### [Mode for the Invention]

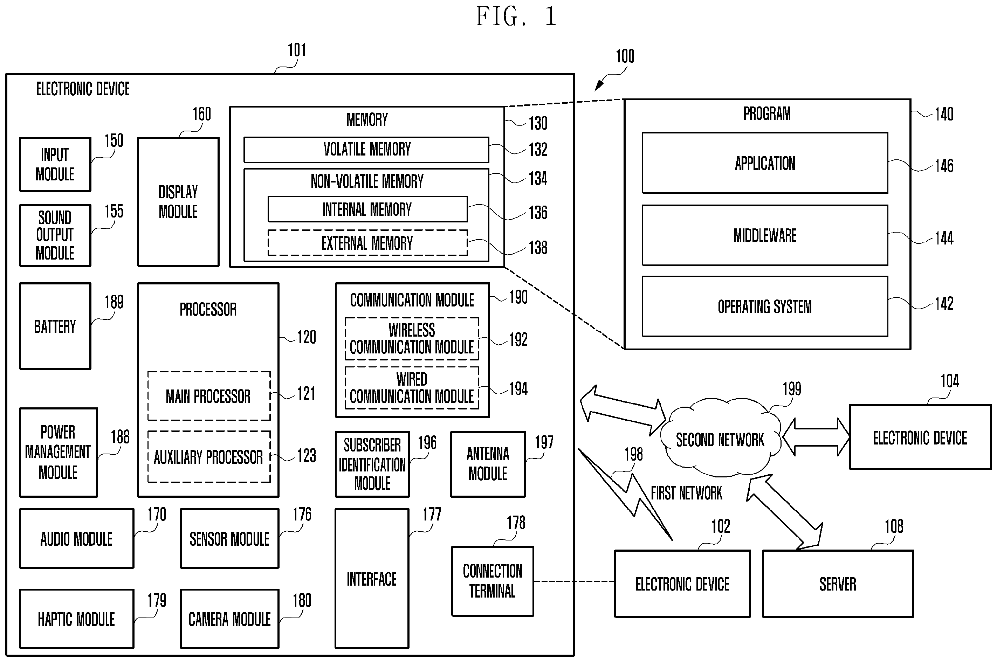

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure designated for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more designated protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements designated in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) on the basis of 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

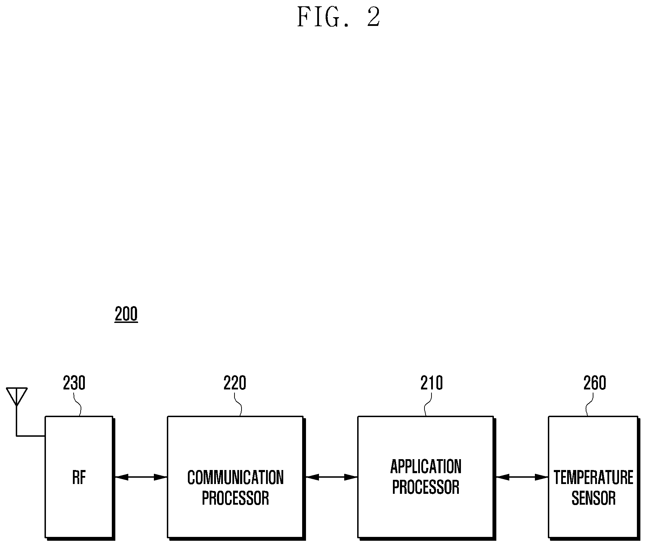

FIG. 2 is a block diagram of an electronic device 200 according to various embodiments.

Referring to FIG. 2, the electronic device 200 (e.g., the electronic device (101) of FIG. 1) may include an application processor 210 (e.g., the processor 120 of FIG. 1), a temperature sensor 260, a communication processor 220, and/or an RF module 230. The components included in FIG. 2 are for some of the components included in the electronic device 200, and the electronic device 200 may include various other components as illustrated in FIG. 1.

The temperature sensor 260 according to various embodiments may measure the temperature of the electronic device 200. For example, the temperature sensor 260 is a component for converting temperature into an electrical characteristic value, and may include at least one of a thermistor, a resistance thermometer, a thermoelectric, a silicon transducer, or a critical temperature resistor (CTR). The temperature sensor 260 may include at least one of various other temperature detection elements.

The application processor 210 according to various embodiments may acquire information related to the temperature of the electronic device from the temperature sensor 260 and transmit the acquired information to the communication processor 220.

For example, the application processor 210 may request information related to the temperature of the electronic device 200 from the temperature sensor 260 and acquire, from the temperature sensor 260, the information in which the temperature of the electronic device 200 is converted into the electrical characteristic value. For example, the application processor 210 may transmit the information related to the temperature of the electronic device 200 in response to the request of the communication processor 220.

The communication processor 220 according to various embodiments may control transmission power of the RF module 230. For example, the transmission power of the RF module may be controlled. For example, the communication processor 220 may control the transmission power of the RF module 230 on the basis of the temperature information of the electronic device 200 acquired from the application processor 210.

The RF module 230 according to various embodiments may communicate with an external electronic device and/or a server through a wireless communication network. For example, the RF module 230 may transmit and receive information to and from an external electronic device and/or a server through an antenna.

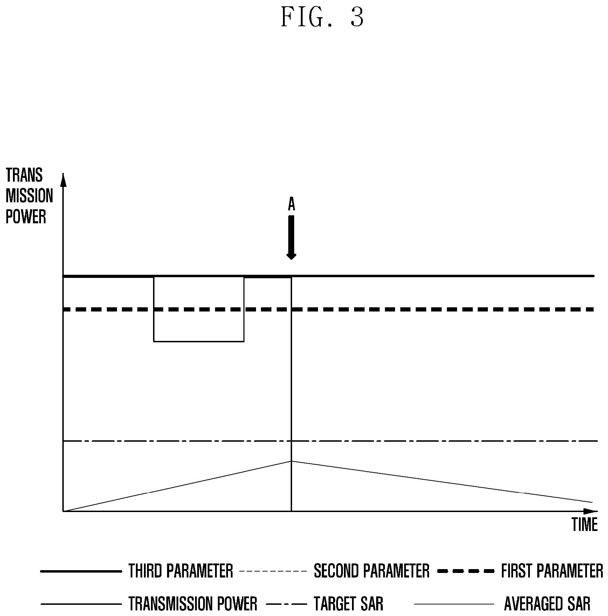

FIG. 3 is a time-dependent transmission power graph related to time averaged SAR (TAS).

The TAS refers to a time-dependent average specific absorption rate (SAR), and may be a technology for controlling a communication module so that the electronic device 200 controls the averaged SAR within a target SAR range for a period defined in a standard.

In the TAS control, a parameter related to the transmission power may be applied. For example, the parameter related to the transmission power may include a first parameter, a second parameter, and/or a third parameter.

For example, the first parameter of the transmission power is a threshold value Plimit of the transmission power for satisfying a target SAR for a designated period of time, which may be maximum time-average output power.

For example, the second parameter of the transmission power may be a value (preserve) for outputting designated power to lower the transmission power when the transmission power exceeds a designated value.

For example, the third parameter of the transmission power may be maximum power Pmax that a transmitter of the RF module 230 may output.

For example, the target SAR may be a reference SAR for satisfying the TAS.

For example, the averaged SAR may be an averaged SAR for the designated period of time.

The electronic device 200 may control the RF module 230 on the basis of the first parameter, the second parameter, and/or the third parameter so that the averaged SAR of the transmission power for the designated period of time satisfies the target SAR.

Time point "A" may be a time point at which the temperature of the electronic device 200 is higher than or equal to the designated value.

The electronic device 200 may perform an NR Call drop and/or LTE Fallback on the RF module 230 at the time point "A" in response to the temperature sensor 260 detecting that the temperature of the electronic device 200 is higher than or equal to the designated value.

In this case, when the temperature of the electronic device 200 rises higher than or equal to the designated value, the RF module 230 may not operate normally, making it difficult to perform communication seamlessly.

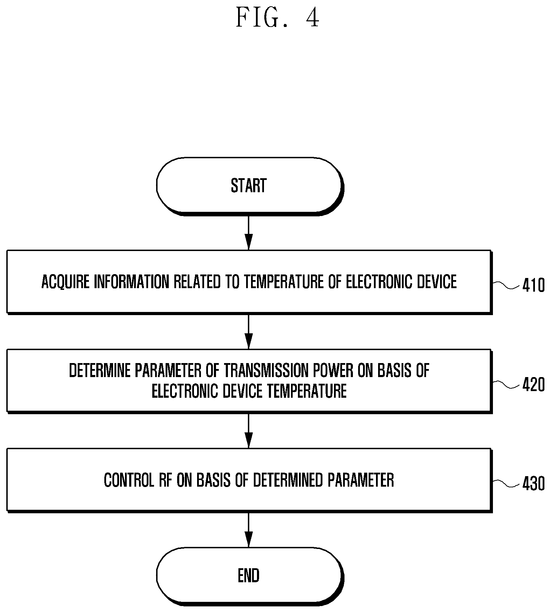

FIG. 4 is a flowchart illustrating a method for the communication processor 220 according to various embodiments to control the RF module 230 on the basis of the temperature of the electronic device 200.

According to various embodiments, in operation 410, the communication processor 220 may acquire the information related to the temperature of the electronic device 200.

According to an embodiment, the temperature sensor 260 may measure the temperature of the electronic device 200. For example, the temperature sensor 260 is a component for converting temperature into an electrical characteristic value, and may include at least one of a thermistor, a resistance thermometer, a thermoelectric, a silicon transducer, or a critical temperature resistor (CTR). The temperature sensor 260 may include at least one of various other temperature detection elements.

According to an embodiment, the application processor 210 may acquire the information related to the temperature of the electronic device 200 from the temperature sensor 260. For example, the application processor 210 may request the information related to the temperature of the electronic device 200 from the temperature sensor 260 and acquire, from the temperature sensor 260, the information in which the temperature of the electronic device 200 is converted into the electrical characteristic value.

According to an embodiment, the communication processor 220 may acquire the information related to the temperature of the electronic device 200 from the application processor 210. For example, the application processor 210 may transmit the information related to the temperature of the electronic device 200 in response to the request of the communication processor 220.

According to various embodiments, in operation 420, the communication processor 220 may determine the parameter related to the transmission power on the basis of the temperature of the electronic device 200.

According to an embodiment, the parameter related to the transmission power may include the first parameter, the second parameter, and/or the third parameter.

For example, the first parameter of the transmission power is the threshold value Plimit of the transmission power for satisfying the target SAR for the designated period of time, which may be the maximum time-average transmission power.

For example, the second parameter of the transmission power may be the value for outputting the designated power to lower the transmission power when the transmission power exceeds the designated value.

For example, the third parameter of the transmission power may be the maximum power Pmax that the transmitter of the RF module 230 may output.

According to an embodiment, the communication processor 220 may determine the second parameter of the transmission power as a first level, a second level, a third level, and/or a fourth level on the basis of the temperature of the electronic device 200. The first level, the second level, the third level, and/or the fourth level of the second parameter may be the value related to the transmission power of the designated value for lowering the transmission power.

According to an embodiment, the communication processor 220 may determine the first parameter of the transmission power as the first level, the second level, and/or the third level on the basis of the temperature of the electronic device 200. The first level, the second level, and/or the third level of the first parameter may be the value related to the average transmission power of the designated value for satisfying the target SAR.

In an embodiment, the communication processor 220 may determine the third parameter of the transmission power as the designated value on the basis of the temperature of the electronic device 200. The designated value of the third parameter may be the value related to the transmission power for setting a threshold of the maximum power Pmax that the transmitter of the RF module 230 may output.

According to various embodiments, in operation 430, the communication processor 220 may control the RF module 230 on the basis of the parameter related to the determined transmission power.

For example, the communication processor 220 may control the transmission power by controlling the RF module 230 to satisfy the determined first parameter, second parameter, and/or third parameter.

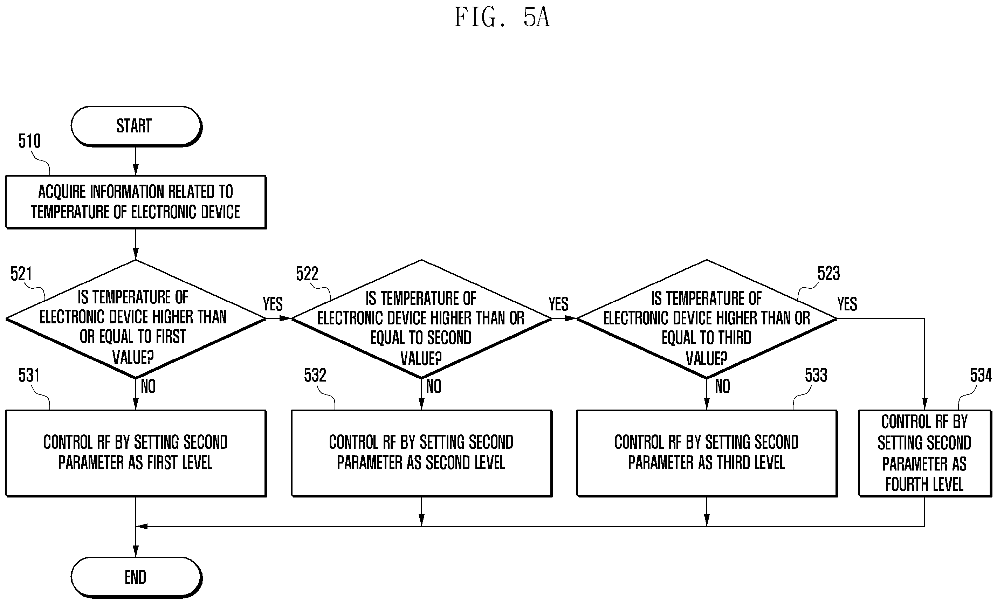

FIG. 5A is a flowchart illustrating a method for the electronic device 200 according to various embodiments to control the RF module 230 on the basis of the temperature of the electronic device 200 according to the first embodiment.

According to various embodiments, in operation 510, the communication processor 220 may acquire the information related to the temperature of the electronic device 200.

According to an embodiment, the temperature sensor 260 may measure the temperature of the electronic device 200. For example, the temperature sensor 260 is a component for converting the temperature into the electrical characteristic value, and may include at least one of the thermistor, the resistance thermometer, the thermoelectric, the silicon transducer, or the critical temperature resistor (CTR). The temperature sensor 260 may include at least one of various other temperature detection elements.

According to an embodiment, the application processor 210 may acquire the information related to the temperature of the electronic device 200 from the temperature sensor 260. For example, the application processor 210 may request the information related to the temperature of the electronic device 200 from the temperature sensor 260 and acquire, from the temperature sensor 260, the information in which the temperature of the electronic device 200 is converted into the electrical characteristic value.

According to an embodiment, the communication processor 220 may acquire the information related to the temperature of the electronic device 200 from the application processor 210. For example, the application processor 210 may transmit the information related to the temperature of the electronic device 200 in response to the request of the communication processor 220.

According to an embodiment, the communication processor 220 may determine the second parameter of the transmission power as the first level, the second level, the third level, and/or the fourth level on the basis of the temperature of the electronic device 200. The first level, the second level, the third level, and/or the fourth level of the second parameter may be the value related to the transmission power of the designated value for lowering the transmission power.

According to various embodiments, in operation 521, the communication processor 220 may identify whether the temperature of the electronic device 200 is higher than or equal to a first value.

According to an embodiment, the first value may be about 41.5°.

According to various embodiments, in operation 531, the communication processor 220 may control the RF module 230 by setting the second parameter of the transmission power as the first level in response to the temperature of the electronic device 200 being less than the first value (e.g., operation 521 - No).

According to an embodiment, the first level of the second parameter of the transmission power may be a value set as a default in the RF module 230 of the electronic device 200.

According to various embodiments, in operation 522, the communication processor 220 may identify whether the temperature of the electronic device 200 is higher than or equal to a second value in response to the temperature of the electronic device 200 being higher than or equal to the first value (e.g., operation 521 - Yes).

According to an embodiment, the second value may be about 43°.

According to various embodiments, in operation 532, the communication processor 220 may control the RF module 230 by setting the second parameter of the transmission power as the second level in response to the temperature of the electronic device 200 being higher than or equal to the first value and less than the second value (e.g., operation 522 - No).

According to an embodiment, the second level of the second parameter of the transmission power may be transmission power having a lower value than the first level.

According to various embodiments, in operation 523, the communication processor 220 may identify whether the temperature of the electronic device 200 is higher than or equal to a third value in response to the temperature of the electronic device 200 being higher than or equal to the second value (e.g., operation 522 - Yes).

According to various embodiments, in operation 533, the communication processor 220 may control the RF module 230 by setting the second parameter of the transmission power as the third level in response to the temperature of the electronic device 200 being higher than or equal to the second value and less than the third value (e.g., operation 523 - No).

According to an embodiment, the third value may be about 45°.

According to an embodiment, the third level of the second parameter of the transmission power may be transmission power having a lower value than the second level.

According to various embodiments, in operation 534, the communication processor 220 may control the RF module 230 by setting the second parameter of the transmission power as the fourth level in response to the temperature of the electronic device 200 being higher than or equal to the third value (e.g., operation 523 - Yes).

According to an embodiment, the fourth level of the second parameter of the transmission power may be transmission power having a lower value than the third level.

According to various embodiments, the communication processor 220 may perform operations 510 to 534 every designated cycle.

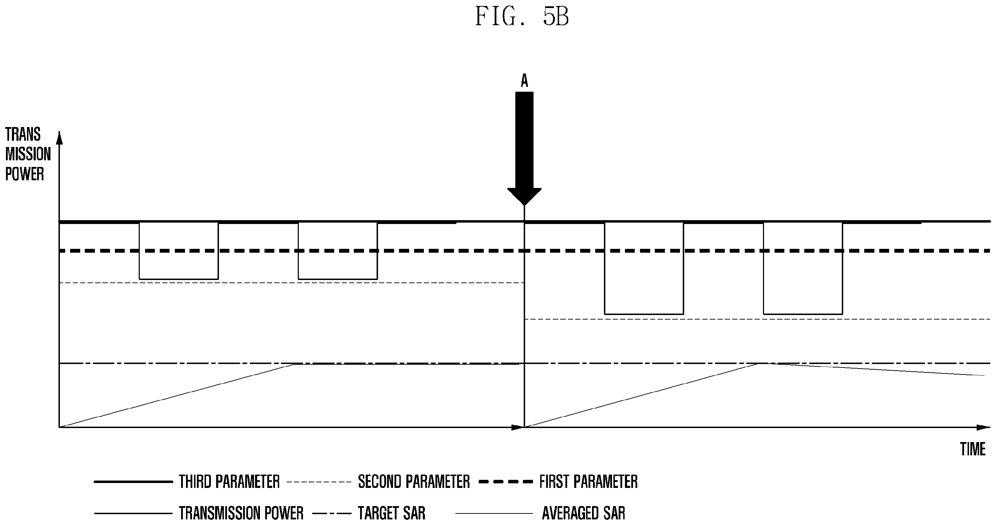

FIG. 5B is a diagram illustrating a transmission power graph when the electronic device 200 according to various embodiments controls the RF module 230 on the basis of the temperature of the electronic device 200 according to the first embodiment.

In the TAS control, the parameter related to the transmission power may be applied. For example, the parameter related to the transmission power may include the first parameter, the second parameter, and/or the third parameter.

For example, the first parameter of the transmission power is the threshold value Plimit of the transmission power for satisfying the target SAR for the designated period of time, which may be the maximum time-average output power.

For example, the second parameter of the transmission power may be the value for outputting the designated power to lower the transmission power when the transmission power exceeds the designated value.

For example, the third parameter of the transmission power may be the maximum power Pmax that the transmitter of the RF module 230 may output.

For example, the target SAR may be the reference SAR for satisfying the TAS.

For example, the averaged SAR may be the averaged SAR for the designated period of time.

The electronic device 200 may control the RF module 230 on the basis of the first parameter, the second parameter, and/or the third parameter so that the averaged SAR of the transmission power for the designated period of time satisfies the target SAR.

According to various embodiments, the communication processor 220 may acquire the information related to the temperature of the electronic device 200 according to operation 510.

According to various embodiments, the temperature of the electronic device 200 may be less than the first value before time point A.

According to various embodiments, the communication processor 220 may control the RF module 230 by setting the second parameter of the transmission power as the first level according to operation 531 in response to the temperature of the electronic device 200 being less than the first value (e.g., operation 521 - No).

According to various embodiments, at time point "A", the temperature of the electronic device 200 may be higher than or equal to the first value and equal to or less than the second value.

According to various embodiments, the communication processor 220 may control the RF module 230 by setting the second parameter of the transmission power as the second level according to operation 532 in response to the temperature of the electronic device 200 being higher than or equal to the first value and less than the second value (e.g., operation 522 - No).

Accordingly, the communication module may maintain the averaged SAR value of the transmission power to be the target or less.

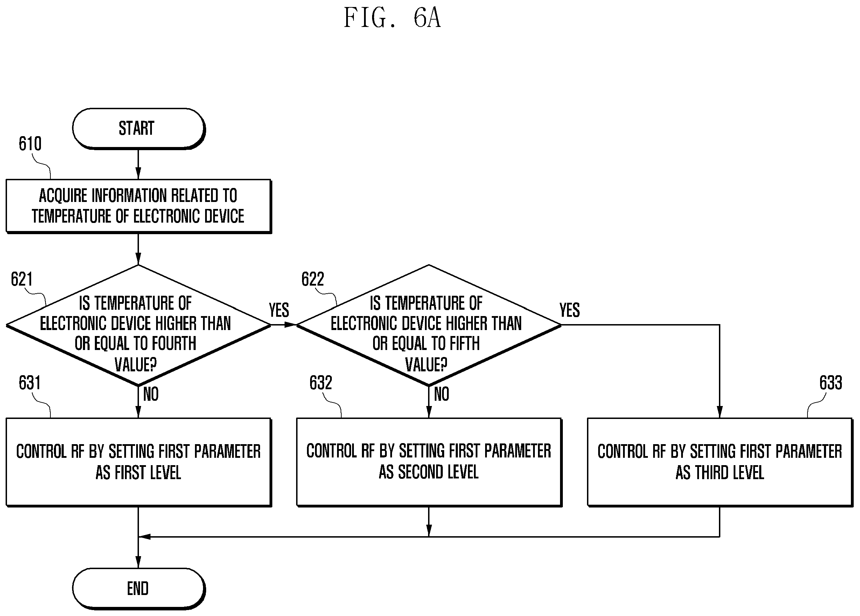

FIG. 6A is a flowchart illustrating a method for the electronic device 200 according to various embodiments to control the RF module 230 on the basis of the temperature of the electronic device 200 according to the second embodiment.

According to various embodiments, in operation 610, the communication processor 220 may acquire the information related to the temperature of the electronic device 200.

According to an embodiment, the temperature sensor 260 may measure the temperature of the electronic device 200. For example, the temperature sensor 260 is a component for converting the temperature into the electrical characteristic value, and may include at least one of the thermistor, the resistance thermometer, the thermoelectric, the silicon transducer, or the critical temperature resistor (CTR). The temperature sensor 260 may include at least one of various other temperature detection elements.

According to an embodiment, the application processor 210 may acquire the information related to the temperature of the electronic device 200 from the temperature sensor 260. For example, the application processor 210 may request the information related to the temperature of the electronic device 200 from the temperature sensor 260 and acquire, from the temperature sensor 260, the information in which the temperature of the electronic device 200 is converted into the electrical characteristic value.

According to an embodiment, the communication processor 220 may acquire the information related to the temperature of the electronic device 200 from the application processor 210. For example, the application processor 210 may transmit the information related to the temperature of the electronic device 200 in response to the request of the communication processor 220.

According to various embodiments, in operation 621, the communication processor 220 may identify whether the temperature of the electronic device 200 is higher than or equal to a fourth value.

According to an embodiment, the fourth value may be about 38°.

According to various embodiments, in operation 631, the communication processor 220 may control the RF module 230 by setting the first parameter of the transmission power as the first level in response to the temperature of the electronic device 200 being less than the fourth value (e.g., operation 621 - No).

According to an embodiment, the first level of the first parameter of the transmission power may be a value that sets the target SAR to 1 W/Kg as a reference.

According to an embodiment, in order to set the first parameter of the transmission power as the first level, the communication processor 220 may set the time for maintaining the transmission power at a second parameter value as a first time (e.g., 50 ms).

According to various embodiments, in operation 622, the communication processor 220 may identify whether the temperature of the electronic device 200 is higher than or equal to a fifth value in response to the temperature of the electronic device 200 being higher or equal to the fourth value (e.g., operation 621 - Yes).

According to an embodiment, the fifth value may be about 40°.

According to various embodiments, in operation 632, the communication processor 220 may control the RF module 230 by setting the first parameter of the transmission power as the second level in response to the temperature of the electronic device 200 being higher than or equal to the fourth value and less than the fifth value (e.g., operation 622 - No).

According to an embodiment, the second level of the first parameter of the transmission power may be a value that sets the target SAR to 0.9 W/Kg as a reference.

According to an embodiment, in order to set the first parameter of the transmission power as the second level, the communication processor 220 may set the time for maintaining the transmission power at the second parameter value as a second time (e.g., 80 ms).

According to various embodiments, in operation 633, the communication processor 220 may control the RF module 230 by setting the first parameter of the transmission power as the third level in response to the temperature of the electronic device 200 being higher than or equal to the fifth value (e.g., operation 622 - Yes).

According to an embodiment, the third level of the first parameter of the transmission power may be a value that sets the target SAR to 0.8 W/Kg as a reference.

According to an embodiment, in order to set the first parameter of the transmission power as the third level, the communication processor 220 may set the time for maintaining the transmission power at the second parameter value as a third time (e.g., 100 ms).

According to various embodiments, the communication processor 220 may repeatedly perform operations 610 to 633 every designated cycle.

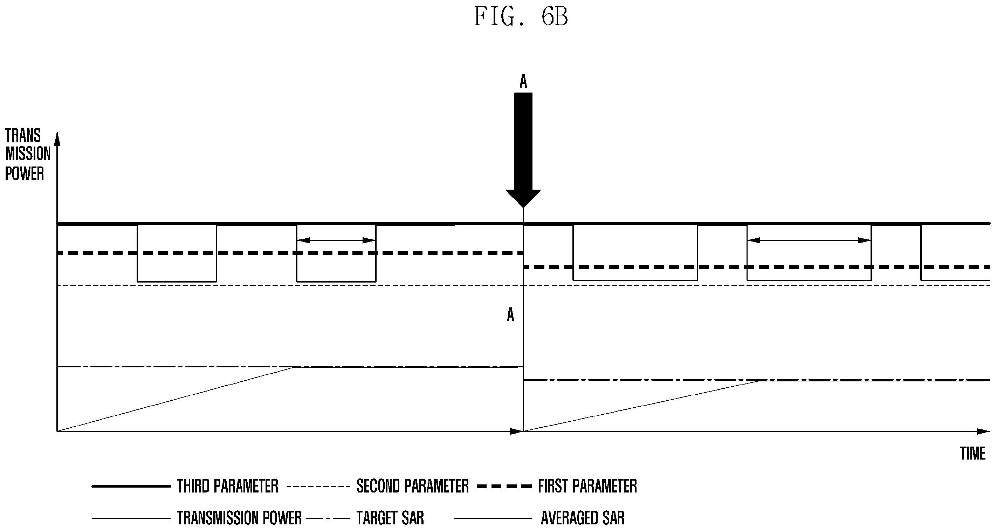

FIG. 6B is a diagram illustrating a transmission power graph when the electronic device 200 according to various embodiments controls the RF module 230 on the basis of the temperature of the electronic device 200 according to the second embodiment.

In the TAS control, the parameter related to the transmission power may be applied. For example, the parameter related to the transmission power may include the first parameter, the second parameter, and/or the third parameter.

For example, the first parameter of the transmission power is the threshold value Plimit of the transmission power for satisfying the target SAR for the designated period of time, which may be maximum time-average output power.

For example, the second parameter of the transmission power may be the value for outputting the designated power to lower the average transmission power when the transmission power exceeds the designated value.

For example, the third parameter of the transmission power may be the maximum power Pmax that the transmitter of the RF module 230 may output.

For example, the target SAR may be the reference SAR for satisfying the TAS.

For example, the averaged SAR may be the averaged SAR for the designated period of time.

The electronic device 200 may control the RF module 230 on the basis of the first parameter, the second parameter, and/or the third parameter so that the averaged SAR of the transmission power for the designated period of time satisfies the target SAR.

According to various embodiments, the communication processor 220 may acquire the information related to the temperature of the electronic device 200 according to operation 610.

According to various embodiments, the temperature of the electronic device 200 may be less than the fourth value before the time point A.

According to various embodiments, the communication processor 220 may control the RF module 230 by setting the first parameter of the transmission power as the first level according to operation 631 in response to the temperature of the electronic device 200 being less than the fourth value (e.g., operation 621 - No).

According to various embodiments, at time point A, the temperature of the electronic device 200 may be higher than or equal to the fourth value and less than the fifth value.

According to various embodiments, the communication processor 220 may control the RF module 230 by setting the first parameter of the transmission power as the second level according to operation 632 in response to the temperature of the electronic device 200 being higher or equal to the fourth value and less than the fifth value (e.g., operation 622 - No).

Accordingly, the communication module may lower the averaged SAR of the transmission power.

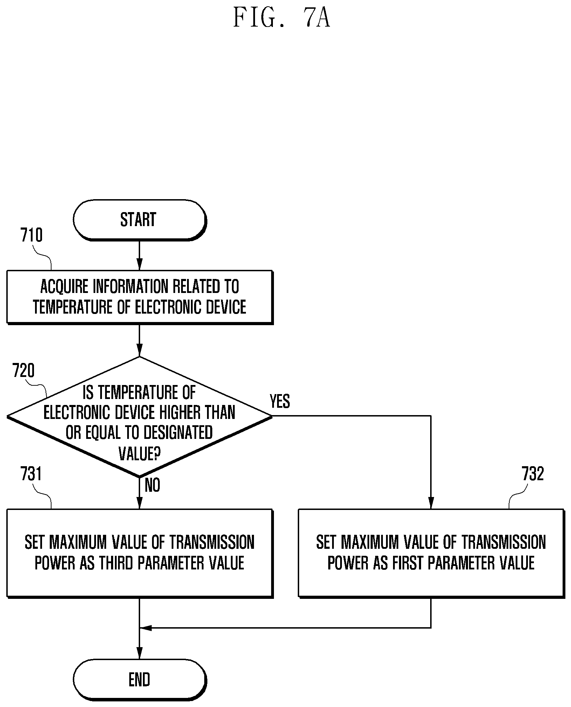

FIG. 7A is a flowchart illustrating a method for the electronic device 200 according to various embodiments to control the RF module 230 on the basis of the temperature of the electronic device 200 according to a third embodiment.

According to various embodiments, in operation 710, the communication processor 220 may acquire the information related to the temperature of the electronic device 200.

According to an embodiment, the temperature sensor 260 may measure the temperature of the electronic device 200. For example, the temperature sensor 260 is a component for converting the temperature into the electrical characteristic value, and may include at least one of the thermistor, the resistance thermometer, the thermoelectric, the silicon transducer, or the critical temperature resistor (CTR). The temperature sensor 260 may include at least one of various other temperature detection elements.

According to an embodiment, the application processor 210 may acquire the information related to the temperature of the electronic device 200 from the temperature sensor 260. For example, the application processor 210 may request the information related to the temperature of the electronic device 200 from the temperature sensor 260 and acquire, from the temperature sensor 260, the information in which the temperature of the electronic device 200 is converted into the electrical characteristic value.

According to an embodiment, the communication processor 220 may acquire the information related to the temperature of the electronic device 200 from the application processor 210. For example, the application processor 210 may transmit the information related to the temperature of the electronic device 200 in response to the request of the communication processor 220.

According to various embodiments, in operation 720, the communication processor 220 may identify whether the temperature of the electronic device 200 is higher than or equal to the designated value.

According to various embodiments, in operation 731, the communication processor 220 may set the maximum value of the transmission power as a third parameter value in response to the temperature of the electronic device 200 being less than the designated value (e.g., operation 720 - No).

According to various embodiments, in operation 732, the communication processor 220 may set the maximum value of the transmission power as a first parameter value in response to the temperature of the electronic device 200 being higher than or equal to the designated value (e.g., operation 720 - Yes).

According to various embodiments, the communication processor 220 may repeatedly perform operations 710 to 732 every designated cycle.

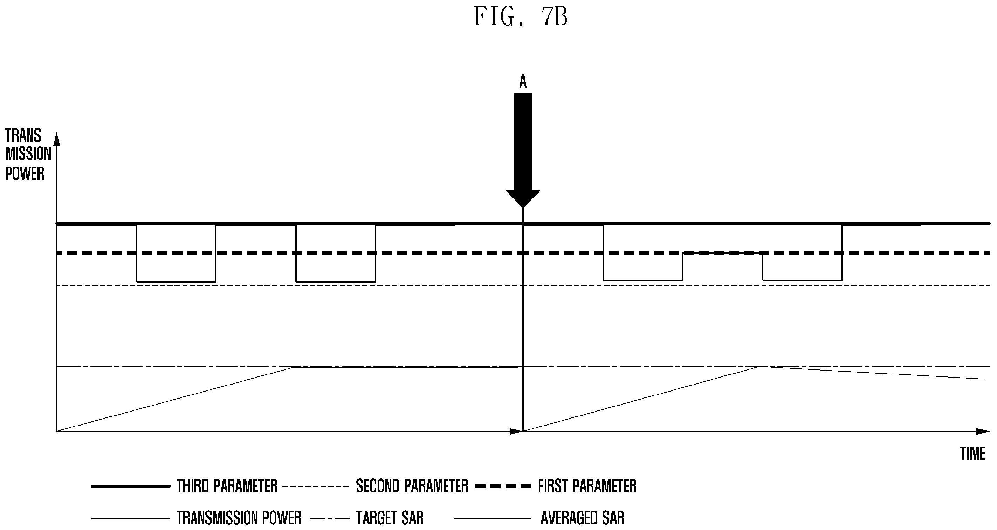

FIG. 7B is a diagram illustrating a transmission power graph when the electronic device 200 according to various embodiments controls the RF module 230 on the basis of the temperature of the electronic device 200 according to the third embodiment.

In the TAS control, the parameter related to the transmission power may be applied. For example, the parameter related to the transmission power may include the first parameter, the second parameter, and/or the third parameter.

For example, the first parameter of the transmission power is the threshold value Plimit of the transmission power for satisfying the target SAR for the designated period of time, which may be maximum time-average output power.

For example, the second parameter of the transmission power may be the value for outputting the designated power to lower the average transmission power when the transmission power exceeds the designated value.

For example, the third parameter of the transmission power may be the maximum power Pmax that the transmitter of the RF module 230 may output.

For example, the target SAR may be the reference SAR for satisfying the TAS.

For example, the averaged SAR may be the averaged SAR for the designated period of time.

The electronic device 200 may control the RF module 230 on the basis of the first parameter, the second parameter, and/or the third parameter so that the averaged SAR of the transmission power for the designated period of time satisfies the target SAR.

According to various embodiments, the communication processor 220 may acquire the information related to the temperature of the electronic device 200 according to operation 710.

According to various embodiments, the temperature of the electronic device 200 may be less than the designated value before the time point A.

According to various embodiments, the communication processor 220 may control the RF module 230 by setting the maximum value of the transmission power as the third parameter value according to operation 731 in response to the temperature of the electronic device 200 being less than the designated value (e.g., operation 720 - No).

According to various embodiments, the temperature of the electronic device 200 may be higher than or equal to the designated value at the time point A.

According to various embodiments, the communication processor 220 may control the RF module 230 by setting the maximum value of the transmission power as the first parameter value according to operation 732 in response to the temperature of the electronic device 200 being higher than or equal to the designated value (e.g., operation 720 - No).

Accordingly, the communication module may maintain the averaged SAR value of the transmission power to be the target or less.

An electronic device according to various embodiments disclosed in the present document includes a temperature sensor, an application processor, a communication processor and an RF module, in which the communication processor may acquire, from the application processor, information related to the electronic device temperature measured by the temperature sensor, determine a parameter related to the transmission power of the RF module on the basis of the temperature of the electronic device, and control the RF module on the basis of the determined parameter.

According to an embodiment, the parameter related to the transmission power may include a first parameter that is a threshold value of the transmission power for satisfying the target SAR for the designated period of time, and the communication processor may determine the first parameter on the basis of the temperature of the electronic device.

According to an embodiment, the communication processor may determine the first parameter as the first level in response to the temperature of the electronic device being less than the designated value, and determine the first parameter as the second level in response to the temperature of the electronic device being higher than or equal to the designated value. The second level may mean a threshold value lower than the first level.

According to an embodiment, the communication processor may determine, at the first level of the first parameter, the time when the RF module outputs the designated power to lower the average transmission power as the first time, and at the second level of the first parameter, the time when the RF module outputs the designated power to lower the average transmission power as the second time. The second time may be longer than the first time.

According to an embodiment, the parameter related to the transmission power includes the second parameter that is a value for outputting the designated power to lower the average transmission power when the transmission power exceeds the designated value, and the communication processor may determine the second parameter on the basis of the temperature of the electronic device.

According to an embodiment, the communication processor determines the second parameter as the first level in response to the temperature of the electronic device being less than the designated value, and determines the second parameter as the second level in response to the temperature of the electronic device being higher than or equal to the designated value, and the second level may mean the transmission power having a value lower than the first level.

According to an embodiment, the parameter related to the transmission power includes the third parameter that is the maximum power value that the transmitter of the RF module may output, and the communication processor may determine the third parameter on the basis of the temperature of the electronic device.

According to an embodiment, the communication processor determines the third parameter as the first level in response to the temperature of the electronic device being less than the designated value, and determines the third parameter as the second level in response to the temperature of the electronic device being higher than or equal to the designated value, and the second level may mean the transmission power having a value lower than the first level.

The electronic device operating method according to an embodiment may include acquiring the information related to the temperature of the electronic device measured by the temperature sensor from the application processor, determining the parameter related to the transmission power of the RF module on the basis of the temperature of the electronic device, and controlling the RF module on the basis of the determined parameter.

## Claims

1. An electronic device, comprising:
a temperature sensor;
an application processor;
a communication processor; and
an RF module,
wherein the communication processor acquires, from the application processor, information related to a temperature of the electronic device measured by the temperature sensor,
determines a parameter related to transmission power of the RF module on the basis of the temperature of the electronic device, and
controls the RF module on the basis of the determined parameter.

2. The electronic device of claim 1, wherein the parameter related to the transmission power include a first parameter which is a threshold value of the transmission power for satisfying a target SAR for a designated period of time, and
the communication processor determines the first parameter on the basis of the temperature of the electronic device.

3. The electronic device of claim 2, wherein the communication processor determines the first parameter as a first level in response to the temperature of the electronic device being less than a designated value, and
determines the first parameter as a second level in response to the temperature of the electronic device being higher than or equal to the designated value, and
the second level is a threshold value lower than the first level.

4. The electronic device of claim 3, wherein the communication processor determines, at the first level of the first parameter, a time when which the RF module outputs designated power to lower average transmission power as a first time, and
determines, at the second level of the first parameter, a time when which the RF module outputs the designated power to lower the average transmission power as a second time, and
the second time is longer than the first time.

5. The electronic device of claim 1, wherein the parameter related to the transmission power includes a second parameter that is a value for outputting designated power to lower average transmission power when the transmission power exceeds a designated value, and
the communication processor determines the second parameter on the basis of the temperature of the electronic device.

6. The electronic device of claim 5, wherein the communication processor determines the second parameter as a first level in response to the temperature of the electronic device being less than the designated value, and
determines the second parameter as a second level in response to the temperature of the electronic device being higher than or equal to the designated value, and
the second level is transmission power having a value lower than the first level.

7. The electronic device of claim 1, wherein the parameter related to the transmission power includes a third parameter that is a maximum power value that a transmitter of the RF module outputs, and
the communication processor determines the third parameter on the basis of the temperature of the electronic device.

8. The electronic device of claim 7, wherein the communication processor determines the third parameter as a first level in response to the temperature of the electronic device being less than a designated value, and
determines the third parameter as a second level in response to the temperature of the electronic device being higher than or equal to the designated value, and
the second level is transmission power having a value lower than the first level.

9. An electronic device operating method, comprising:
acquiring information related to a temperature of an electronic device measured by a temperature sensor from an application processor;
determining a parameter related to transmission power of an RF module on the basis of the temperature of the electronic device; and
controlling the RF module on the basis of the determined parameter.

10. The electronic device operating method of claim 9, wherein the parameter related to the transmission power includes a first parameter which is a threshold value of the transmission power for satisfying a target SAR for a designated period of time, and
the electronic device operating method further comprises:
determining the first parameter on the basis of the temperature of the electronic device.

11. The electronic device operating method of claim 10, further comprising:
determining the first parameter as a first level in response to the temperature of the electronic device being less than a designated value, and
determining the first parameter as a second level in response to the temperature of the electronic device being higher than or equal to the designated value,
wherein the second level is a threshold value lower than the first level.

12. The electronic device operating method of claim 11, further comprising:
determining, at the first level of the first parameter, a time when which the RF module outputs designated power to lower average transmission power as a first time; and
determining, at the second level of the first parameter, a time when which the RF module outputs designated power to lower the average transmission power as a second time,
wherein the second time is longer than the first time.

13. The electronic device operating method of claim 9, wherein the parameter related to the transmission power includes a second parameter that is a value for outputting designated power to lower average transmission power when the transmission power exceeds the designated value, and
the electronic device operating method further comprises:
determining the second parameter on the basis of the temperature of the electronic device.

14. The electronic device operating method of claim 13, further comprising:
determining the second parameter as a first level in response to the temperature of the electronic device being less than the designated value; and
determining the second parameter as a second level in response to the temperature of the electronic device being higher than or equal to the designated value,
wherein the second level is transmission power having a value lower than the first level.

15. The electronic device operating method of claim 9, wherein the parameter related to the transmission power includes a third parameter that is a maximum power value that a transmitter of the RF module outputs, and
the electronic device operating method further comprises:
determining the third parameter on the basis of the temperature of the electronic device.
